# FASCICULE DE BREVET EUROPEEN

(11) **EP 3 902 758 B1**
(45) Date de publication et mention de la délivrance du brevet: **17.04.2024**
(21) Numéro de dépôt: 19832972.4
(22) Date de dépôt: 26.12.2019
(51) Int. Cl.: B65H 57/16, B21F 23/00, B21F 99/00, B29D 30/38

(54) **BLOC GUIDE-FIL POUR LA FABRICATION D'ELEMENTS DE RENFORT GAINES POUR PNEUMATIQUES**
DRAHTFÜHRUNGSBLOCK ZUR HERSTELLUNG VON UMMANTELTEN VERSTÄRKUNGSELEMENTEN FÜR REIFEN
WIRE GUIDE BLOCK FOR PRODUCING SHEATHED REINFORCEMENT ELEMENTS FOR TYRES

(30) Priorité: 30.12.2018 FR 1874388
(43) Date de publication de la demande: 03.11.2021
(73) Titulaire: COMPAGNIE GENERALE DES ETABLISSEMENTS MICHELIN, 63000 Clermont-Ferrand (FR)
(72) Inventeur: CHEVALIER, Alain, 63040 CLERMONT-FERRAND CEDEX 9 (FR); LIMOZIN, Bastien, 63040 CLERMONT-FERRAND CEDEX 9 (FR); RIGO, Sébastien, 63040 CLERMONT-FERRAND CEDEX 9 (FR); ROUSSEAU, Patrice, 63040 CLERMONT-FERRAND CEDEX 9 (FR)
(74) Mandataire: M.F.P. Michelin
(86) Numéro de dépôt international: PCT/EP2019/087043
(87) Numéro de publication internationale: WO 2020/141142

(56) Documents cités:
- EP-A2- 0 438 668
- EP-A2- 1 577 121
- WO-A1-2017/198559
- WO-A1-2019/115786
- CN-A- 108 083 019
- CN-U- 202 848 765

## Description

### DOMAINE DE L'INVENTION

Le domaine de la présente invention est celui des blocs guide-fils et des procédés mettant en oeuvre de tels blocs guide-fils pour la fabrication d'éléments de renfort gainés pour pneumatiques.

La présente invention a pour objet un bloc-guide-fil, un ensemble comprenant un tel bloc guide-fil, un procédé de centrage d'une pluralité d'éléments filaires métalliques à travers un tel bloc guide-fil, un procédé de fabrication d'une pluralité d'éléments filaires métalliques gainés comprenant les étapes d'un tel procédé de centrage, un procédé de fabrication d'un produit renforcé par extrusion comprenant les étapes d'un tel procédé de fabrication d'une pluralité d'éléments filaires métalliques gainés selon l'invention, un procédé de fabrication d'un pneumatique comprenant les étapes d'un tel procédé de centrage et l'utilisation d'un tel bloc guide-fil pour le centrage d'une pluralité d'éléments filaires métalliques.

### ETAT DE LA TECHNIQUE

Pour la production d'éléments de renfort gainés pour pneumatiques à partir d'éléments filaires métalliques, les procédés de gainage connus, tels que décrits par exemple dans EP1577121, WO2017198559 et WO2015014776, comprennent une étape de guidage dans laquelle un élément filaire métallique passe dans un guide fil ainsi qu'une étape de gainage dans laquelle le fil passe dans une filière d'extrusion de la gaine autour d'élément filaire métallique.

Lors du défilement d'un élément filaire métallique dans un bloc guide-fil, les forces de frottement exercées par le bloc guide-fil sur la surface de l'élément filaire métallique conduisent à une abrasion de la surface de l'élément filaire métallique. Cette abrasion est d'autant plus marquée que la vitesse de défilement est élevée.

De plus, l'élément filaire métallique peut comprendre une âme, par exemple en acier, et une couche d'un revêtement métallique de plus faible dureté que l'âme.

La matière arrachée par abrasion peut s'accumuler et finir par boucher le bloc guide-fil, occasionnant la rupture de l'élément filaire métallique.

En outre, chaque rupture nécessite d'interrompre la production des éléments de renfort gainés.

Pour optimiser la production, il est souhaitable de maintenir une vitesse de défilement la plus élevée possible tout en limitant le risque de rupture de l'élément filaire métallique.

Un objectif de l'invention est de proposer un bloc guide-fil permettant d'améliorer le compromis entre la robustesse du procédé de centrage en limitant le risque de rupture des éléments filaires métalliques et le centrage de l'élément filaire métallique dans le guide-fil.

### BREVE DESCRIPTION DE L'INVENTION

Pour ce faire est proposé un bloc guide-fil comprenant un orifice de guidage d'une pluralité n d'éléments filaires métalliques k, chaque élément filaire métallique k étant de rayon *r*_{1,k}, l'orifice de guidage comprenant :
- une pluralité de n portions de centrage, chaque portion de centrage étant configurée pour centrer un élément filaire métallique k selon un axe de centrage *A_{c}* orthogonal à un plan *Pᵢ* de sortie de l'élément filaire métallique, chaque portion de centrage étant inscrite, dans le plan *Pᵢ*, dans un cercle *Cᵢ* centré sur un point de l'axe de centrage *A_{c}* et de rayon *r*_{2,k} supérieur ou égal à 1,03 *r*_{1,k} et inférieur ou égal à 1,20 *r*_{1,k}, chaque portion de centrage étant délimitée par au moins trois surfaces de centrage tangentes au cercle *Cᵢ* les surfaces de centrage étant deux à deux disjointes les unes des autres,
- au moins une portion d'évacuation principale configurée pour évacuer un matériau issu de l'abrasion des éléments filaires métalliques lors de leur passage entre les surfaces de centrage des portions de centrage,
ladite portion d'évacuation principale formant un passage reliant entre elles au moins deux portions de centrage.

Avantageusement, un bloc guide-fil selon l'invention permet de limiter le risque de rupture des éléments filaires métalliques grâce à la configuration particulière de la portion d'évacuation principale qui facilite l'évacuation de matière métallique issue de l'abrasion au cours du passage des éléments filaires métalliques entre les surfaces de centrage des portions de centrage tout en permettant un excellent centrage de chaque élément filaire métallique lors de son passage dans chaque portion de centrage dont les surfaces de centrage sont ajustées au plus près de chaque élément filaire métallique. On obtient alors, comme le démontrent les essais comparatifs décrits ci-après, un compromis amélioré entre la robustesse du procédé de centrage et la qualité du centrage de chaque élément filaire métallique.

On notera également que le bloc guide-fil permet le centrage d'éléments filaires métalliques identiques ou différents.

On notera que le bloc guide-fil permet le centrage d'éléments filaires métalliques k de rayons *r*_{1,k}, égaux ou différents. Ainsi, dans un mode de réalisation préféré permettant de simplifier le procédé, tous les k éléments filaires métalliques présentent le même rayon de sorte que *r*_{1,k} = *r*₁ et *r*_{2,k} = *r*₂. Dans un autre mode de réalisation, les k éléments filaires métalliques peuvent présenter des rayons *r*_{1,k} différents de sorte que les portions de centrage sont inscrites, dans le plan *Pᵢ*, dans des cercle *Cᵢ* de rayon *r*_{2,k} différents.

On notera également que le bloc guide-fil permet le centrage d'éléments filaires métalliques constitués de monofilaments métalliques et/ou d'assemblages de monofilaments métalliques. Ainsi, dans un mode de réalisation, on pourra guider un ou plusieurs monofilaments métalliques et un ou plusieurs assemblages de monofilaments métalliques. Dans un autre mode de réalisation, celui-ci préféré, on pourra guider au moins un monofilament métallique, c'est-à-dire qu'au moins un élément filaire métallique est constitué d'un monofilament métallique. Dans encore un autre mode de réalisation, celui-ci encore plus préféré, on pourra guider uniquement des monofilaments métalliques, c'est-à-dire que chaque élément filaire métallique est constitué d'un monofilament métallique. Dans encore un autre mode de réalisation, on pourra guider uniquement des assemblages de monofilaments métalliques, c'est-à-dire que chaque élément filaire métallique est constitué d'un assemblage de monofilaments métalliques.

Le bloc guide-fil selon l'invention peut également comprendre une ou plusieurs des caractéristiques suivantes, considérées individuellement ou selon toutes les combinaisons techniquement possibles :
- les axes de centrage *A_{c}* des portions de centrage sont sensiblement parallèles entre eux ; et/ou
- chaque portion de centrage est reliée à au moins une autre portion de centrage par au moins une portion d'évacuation principale, les portions de centrage et d'évacuation principale formant un réseau de portions de centrage reliées deux à deux par au moins une portion d'évacuation principale ; et/ou
- une première portion d'évacuation principale forme un passage reliant une première portion de centrage à une deuxième portion de centrage, et une deuxième portion d'évacuation principale forme un passage reliant la première portion de centrage à une troisième portion de centrage ; et/ou

- chaque portion d'évacuation principale est délimitée, dans le plan *Pᵢ*, par une courbe directrice ouverte délimitée par :
   - une première paire de surfaces de centrage d'une première portion de centrage,
   - une deuxième paire de surfaces de centrage d'une deuxième portion de centrage, la portion d'évacuation principale formant le passage reliant entre elles la première et la deuxième portion de centrage,
      la distance la plus petite entre chaque surface de centrage de chaque première et deuxième paire étant inférieure à chaque rayon *r*_{1,k} de chaque élément filaire métallique k destiné à être centré respectivement dans chaque première et deuxième portion de centrage de façon à empêcher le passage de l'élément filaire métallique depuis chaque portion de centrage dans la portion d'évacuation principale; et/ou
      - les axes de centrage *A_{c}* des portions de centrage sont, dans le plan *Pᵢ*, sensiblement alignés les uns avec les autres selon une direction d'alignement ; et/ou
      - chaque portion de centrage est délimitée, dans le plan *Pᵢ*, par une courbe directrice ouverte sensiblement symétrique par rapport à un plan sensiblement parallèle à la direction d'alignement et comprenant la direction d'alignement ; et/ou
      - chaque portion d'évacuation principale est délimitée, dans le plan *Pᵢ*, par une courbe directrice ouverte sensiblement symétrique par rapport à un plan sensiblement parallèle à la direction d'alignement et comprenant la direction d'alignement ; et/ou
      - les portions de centrage et d'évacuation principale sont, dans le plan *Pᵢ*, délimitées par une courbe directrice sensiblement symétrique par rapport à un plan sensiblement perpendiculaire par rapport à un plan sensiblement parallèle à la direction d'alignement ; et/ou
      - l'orifice de guidage comprend au moins une portion d'évacuation complémentaire, chaque portion d'évacuation complémentaire étant délimitée, dans le plan *Pᵢ*, par une courbe directrice fermée reliant deux surfaces de centrage d'une même portion de centrage l'une à l'autre et délimitée par ces deux surfaces de centrage de cette même portion de centrage ; et/ou
         chaque surface de centrage d'une portion de centrage est, dans le plan *Pᵢ*, reliée à une autre surface de centrage:
         - par une courbe directrice d'une portion d'évacuation complémentaire dans le cas où l'autre surface de centrage délimite la même portion de centrage, et
         - par une courbe directrice d'une portion d'évacuation principale dans le cas où l'autre surface de centrage délimite une autre portion de centrage; et/ou
      - la distance la plus petite entre les deux surfaces de centrage de la courbe directrice délimitant la portion d'évacuation complémentaire est inférieure à *r*_{1,k} de façon à empêcher le passage de l'élément filaire métallique k depuis la portion de centrage destinée à centrer l' élément filaire métallique k dans la portion d'évacuation complémentaire ; et/ou
      - les portions de centrage, d'évacuation principale et d'évacuation complémentaires sont, dans le plan *Pᵢ*, délimités par une courbe directrice sensiblement symétrique par rapport à un plan sensiblement parallèle à la direction d'alignement et comprenant la direction d'alignement ; et/ou
      - les portions de centrage, d'évacuation principale et d'évacuation complémentaires sont, dans le plan *Pᵢ*, délimités par une courbe directrice sensiblement symétrique par rapport à un plan sensiblement perpendiculaire par rapport à un plan sensiblement parallèle à la direction d'alignement et comprenant la direction d'alignement ; et/ou
      - une paroi interne d'au moins une portion de centrage et/ou d'au moins une portion d'évacuation principale est polie ; et/ou
      - *r*_{*1*,k} est supérieur ou égal à 0,02 mm, de préférence supérieur ou égal à 0,05 mm, plus préférentiellement supérieur ou égal à 0,12 mm et encore plus préférentiellement supérieur ou égal à 0,14 mm ; et/ou
      - *r*_{*1*,k} est inférieur ou égal à 0,25 mm, de préférence inférieur ou égal à 0,23 mm et plus préférentiellement inférieur ou égal à 0,21 mm ; et/ou
      - le ratio surfacique RS correspondant, dans le plan *Pᵢ*, au quotient de la somme des surfaces des cercles inscrits aux portions de centrage par la surface de l'orifice de guidage, est supérieur ou égal à 0,51, de préférence supérieur ou égal à 0,53, plus préférentiellement supérieur ou égal à 0,57 et très préférentiellement supérieur ou égal à 0,60 ; et/ou
      - le ratio surfacique RS correspondant, dans le plan *Pᵢ*, au quotient de la somme des surfaces des cercles inscrits aux portions de centrage par la surface de l'orifice de guidage, est inférieur ou égal à 0,90, de préférence inférieur ou égal à 0,80 plus préférentiellement inférieur ou égal à 0,75 et très préférentiellement inférieur ou égal à 0,70 ; et/ou
      - le ratio surfacique RS correspondant, dans le plan *Pᵢ*, au quotient de la somme des surfaces des cercles inscrits aux portions de centrage par la surface de l'orifice de guidage est supérieur ou égal à 0,51 et inférieur ou égal à 0,75, de préférence supérieur ou égal à 0,51 et inférieur ou égal à 0,70 et plus préférentiellement supérieur ou égal à 0,51 et inférieur ou égal à 0,60 et/ou
      - *r*_{2,k} est inférieur ou égal à 1,15 *r*_{1,k}, de préférence à 1,12 *r*_{1,k} et plus préférentiellement à 1,06 *r*_{1,k}. et/ou
      - l'orifice de guidage comprend au moins une portion de guidage amont configurée pour guider chaque élément filaire métallique vers chaque portion de centrage ; et/ou
      - la surface de la section de la portion de guidage amont est décroissante d'amont en aval de la portion de guidage amont ; et/ou
      - chaque axe de centrage est situé à une distance supérieure ou égale à 2,1 *r*_{1,*k*}, de préférence 2,3 *r*_{1,k} de chaque autre axe de centrage qui lui est directement adjacent ; et/ou
      - chaque axe de centrage est situé à une distance inférieure ou égale à 4 *r*_{1,k}, de préférence 3 *r*_{1,k} de chaque autre axe de centrage qui lui est directement adjacent ; et/ou
      - le bloc guide-fil est monobloc ; et/ou
      - le bloc guide-fil est en matériau métallique, céramique ou composite.

L'invention se rapporte également à un dispositif de gainage comprenant un bloc guide-fil tel que décrit ci-dessus, le dispositif de gainage comprenant en outre un canal d'alimentation configuré pour acheminer une composition polymérique de gainage en sortie de chaque portion de centrage.

Le dispositif de gainage selon l'invention peut également comprendre une ou plusieurs des caractéristiques suivantes, considérées individuellement ou selon toutes les combinaisons techniquement possibles :
- un premier et un deuxième canaux d'alimentation configurés pour acheminer la composition polymérique de gainage en sortie de chaque portion de centrage, le premier canal d'alimentation et le deuxième canal d'alimentation étant agencés de part et d'autre de chaque portion de centrage ; et/ou
- les axes de centrage des portions de centrage sont, dans le plan *Pᵢ*, sensiblement alignés les uns avec les autres selon une direction d'alignement, le premier canal d'alimentation est agencé d'un côté d'un plan parallèle à la direction d'alignement et le deuxième canal d'alimentation est agencé de l'autre côté du plan parallèle à la direction d'alignement et comprenant la direction d'alignement ; et/ou
- le ou chaque canal d'alimentation est agencé de façon à revêtir collectivement la pluralité d'éléments filaires métalliques en sortie des portions de centrage.

L'invention se rapporte également à un procédé de centrage d'une pluralité d'éléments filaires métalliques, comportant au moins :
- une étape de fourniture d'une pluralité d'éléments filaires métalliques et
- une étape de centrage de chaque élément filaire métallique à travers une portion de centrage respective d'un bloc guide-fil tel que décrit ci-dessus.

Selon un mode de réalisation du procédé de centrage selon l'invention, chaque élément filaire métallique est de rayon *r*₁.

L'invention se rapporte également à un procédé de fabrication d'une bandelette comprenant une pluralité d'éléments filaires métalliques revêtus collectivement par une composition polymérique, le procédé comprenant :
- un procédé de centrage de la pluralité d'éléments filaires métalliques tel que décrit ci-dessus,
- puis, une étape de revêtement collectif de la pluralité d'éléments filaires métalliques par la composition polymérique.

L'invention se rapporte également à un procédé de fabrication d'un produit renforcé par extrusion, comprenant les étapes d'un procédé de fabrication d'une bandelette tel que décrit ci-dessus, et comprenant, en aval de l'étape de revêtement collectif de la pluralité d'éléments filaires métalliques par la composition polymérique, une étape de noyage de la bandelette dans une matrice d'élastomère.

L'invention se rapporte également à un procédé de fabrication d'un pneumatique comprenant les étapes d'au moins un procédé tel que décrit ci-dessus.

L'invention se rapporte également à une utilisation d'un bloc guide-fil tel que décrit ci-dessus pour le centrage d'une pluralité d'éléments filaires métalliques.

Selon un mode de réalisation de l'utilisation selon l'invention, chaque élément filaire métallique est de rayon r₁.

L'invention se rapporte également à un ensemble comprenant un bloc guide-fil tel que décrit ci-dessus et une pluralité d'éléments filaires métalliques de rayon r₁, chaque élément filaire métallique étant destiné à être centré respectivement par une portion de centrage du bloc guide-fil.

### BREVE DESCRIPTION DES FIGURES

D'autres caractéristiques et avantages de la présente invention apparaitront à la lecture de la description et des figures suivantes :
[Fig. 1] est une coupe longitudinale d'une portion de centrage d'un bloc guide-fil selon un mode de réalisation de l'invention,
[Fig. 2] est une vue, dans le plan *Pᵢ* et centrée sur une portion de centrage, du bloc guide-fil de la figure 1,
[Fig. 3] illustre les surfaces de centrage de la portion de centrage représentée sur la figure 2,
[Fig. 4] est une vue dans le plan *Pᵢ* d'un bloc guide-fil selon un premier mode de réalisation particulier de l'invention,
[Fig. 5] est une vue dans le plan *Pᵢ* d'un bloc guide-fil selon un deuxième mode de réalisation particulier de l'invention,
[Fig. 6] est une coupe longitudinale d'une portion de centrage d'un bloc guide-fil selon un mode de réalisation de l'invention,
[Fig. 7] illustre un procédé de centrage d'une pluralité de monofilaments métalliques selon l'invention,
[Fig. 8] illustre un procédé de fabrication d'une pluralité de monofilaments métalliques gainés selon l'invention,
[Fig. 9] illustre un procédé de fabrication d'un produit renforcé par extrusion selon l'invention,
[Fig. 10] représente des exemples de blocs guide-fils différents des blocs guide-fils selon l'invention, et
[Fig. 11] représente des exemples de blocs guide-fils différents des blocs guide-fils selon l'invention.

Il est à noter que ces dessins n'ont d'autre but que d'illustrer le texte de la description et ne constituent en aucune sorte une limitation de la portée de l'invention.

Sur les différentes figures, les éléments analogues sont désignés par des références identiques.

En outre, les différents modes de réalisation de l'invention sont compatibles entre eux.

### DESCRIPTION DETAILLEE DE L'INVENTION

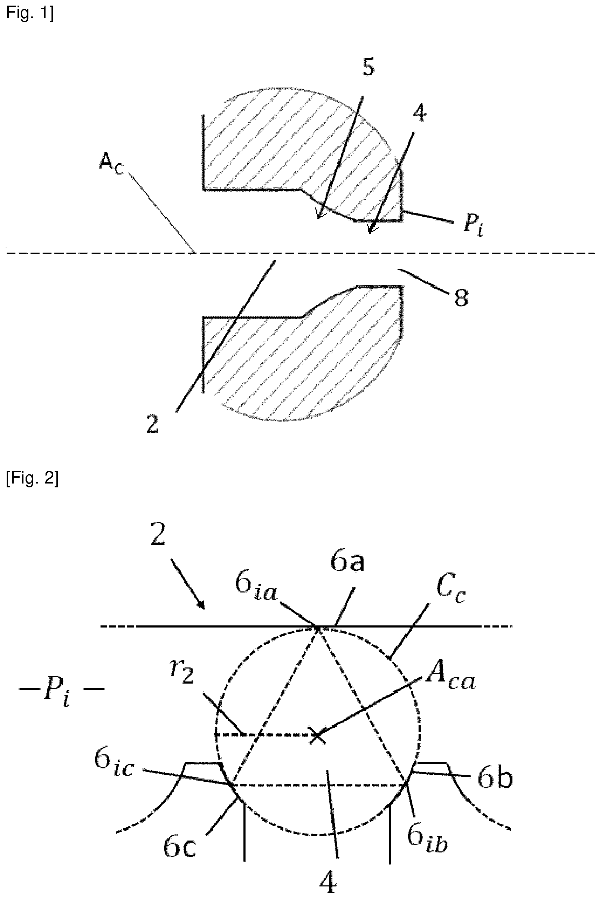

Comme illustré en figure 1, l'invention concerne un bloc guide-fil comprenant un orifice de guidage 2 d'une pluralité n d'éléments filaires métalliques k de rayon *r*_{1,k}. Les rayons *r*_{1,k} de chaque élément filaire métallique destiné à être guidé peuvent être égaux ou différents. Dans les modes de réalisation décrits ci-dessous, et à des fins de clarté de l'exposé, tous les rayons *r*_{1,k}. sont égaux à *r*₁. En outre, dans les modes de réalisation décrits ci-dessous, et à des fins de clarté de l'exposé, chaque élément filaire métallique est constitué d'un monofilament métallique.

Un tel bloc guide-fil peut être monobloc ou constitué d'une pluralité d'éléments juxtaposés.

Un tel bloc guide-fil peut être réalisé à partir de tout matériau, ou de toute combinaison de matériaux, ayant une dureté supérieure à celle des monofilaments métalliques. Les matériaux éligibles pour la réalisation d'un tel bloc guide-fil comprennent notamment des matériaux métalliques, céramiques, ou composites.

Selon certains modes de réalisation, *r*₁ est supérieur ou égal à 0,02 mm, de préférence supérieur ou égal à 0,05 mm, plus préférentiellement supérieur ou égal à 0,12 mm et encore plus préférentiellement supérieur ou égal à 0,14 mm.

Selon certains modes de réalisation, *r*₁ est inférieur ou égal à 0,25 mm, de préférence inférieur ou égal à 0,23 mm et plus préférentiellement inférieur ou égal à 0,21 mm.

Les domaines de valeurs spécifiés ci-dessus pour le rayon *r*₁ des monofilaments métalliques sont particulièrement adaptés à la mise en oeuvre d'un procédé de centrage dans le cadre de la fabrication d'un élément de renfort gainé pour pneumatique.

L'orifice de guidage 2 est un trou traversant configuré pour guider une pluralité de n monofilaments métalliques défilant dans le bloc guide-fil. L'orifice de guidage 2 comprend une entrée et une sortie configurées pour que la pluralité de n monofilaments métalliques traverse l'orifice de guidage 2 de l'entrée vers la sortie.

Dans le mode de réalisation illustré en figure 1, l'orifice de guidage 2 est traversé par plusieurs axes de centrage dont seul l'axe *A_{c}* est représenté sur la figure 1. L'orifice de guidage 2 comprend plusieurs portions de centrage dont seule la portion de centrage 4 est représentée sur la figure 1. La portion de centrage 4 est configurée pour centrer un monofilament métallique selon l'axe de centrage *A_{c}.* De manière générale, l'orifice de guidage 2 est configuré pour guider une pluralité de *n* monofilaments métalliques défilant dans le bloc guide-fil et comprend *n* portions de centrage, chacune configurée pour centrer un monofilament métallique selon un axe de centrage respectif. En d'autres termes, en sortie de l'orifice de guidage 2, chacun des n monofilaments métalliques défile dans une portion de centrage respective le long d'un axe de centrage *A_{c}* respectif.

Chaque portion de centrage 4 peut par exemple être de forme cylindrique tel qu'illustré en figure 1, ou par exemple de forme tronconique.

Selon certains modes de réalisation, les portions de centrage 4 peuvent être agencées de sorte que chaque axe de centrage *A_{c}* soit situé à une distance supérieure ou égale à 2,1 *r*₁, de préférence 2,3 *r*₁ de chaque autre axe de centrage *A_{c}* qui lui est directement adjacent. Selon certains modes de réalisation, les portions de centrage 4 peuvent en outre être agencées de sorte que chaque axe de centrage *A_{c}* soit situé à une distance inférieure ou égale à 4 *r*₁, de préférence 3 *r*₁ de chaque autre axe de centrage *A_{c}* qui lui est directement adjacent. Selon certains modes de réalisation, les portions de centrage peuvent être agencées de sorte que chaque axe de centrage *A_{c}* soit situé à une distance égale à 2,8 *r*₁ de chaque axe de centrage *A_{c}* qui lui est directement adjacent.

Dans le mode de réalisation illustré en figure 1, l'orifice de guidage 2 comprend une portion de guidage amont 5. La portion de guidage amont 5 est configurée pour guider un premier monofilament métallique vers la portion de centrage 4. Au sens de l'invention, la section de la portion de guidage amont 5 est la surface de ladite portion de guidage amont 5 dans un plan orthogonal à l'axe de centrage *A_{c}* correspondant à ladite portion de centrage 4. Selon certains modes de réalisation, la surface de la section de la portion de guidage amont 5 est décroissante d'amont en aval de la portion de guidage amont 5. De manière générale, l'orifice de guidage 2 peut comprendre une pluralité de *n* portions de guidage amont, chacune des *n* portions de guidage amont étant configurée pour guider un monofilament métallique vers une des n portions de centrage.

Pour chaque portion de centrage 4, un plan *Pᵢ* de sortie du monofilament métallique est défini comme étant le plan orthogonal à l'axe de centrage *A_{c}* correspondant, en sortie de ladite portion de centrage 4.

Selon le mode de réalisation illustré en figures 1 à 5, les plans *Pᵢ* de sortie d'un monofilament métallique définis pour chaque portion de centrage sont confondus. En d'autres termes, il existe un seul plan *Pᵢ* de sortie des monofilaments métalliques, les axes de centrage *A_{c}* sont parallèles, et il existe un seul plan *Pᵢ* de sortie des monofilaments métalliques orthogonal aux axes de centrage *A_{c}* en sortie des portions de centrage.

Comme illustré en figure 2 qui représente une vue dans le plan *Pᵢ* centrée sur une portion de centrage 4 d'un bloc guide-fil selon un mode de réalisation de l'invention, la section de chaque portion de centrage 4 dans le plan *Pᵢ* est inscrite dans un cercle *C_{c}* centré sur un point de l'axe de centrage *A_{c}* et de rayon *r*₂ supérieur ou égal à 1,03 *r*₁ et inférieur ou égal à 1,20 *r*₁, de préférence à 1,15 *r*₁, plus préférentiellement à 1,12 *r₁*, et encore plus préférentiellement 1,06 *r*ᵢ. En d'autres termes, la surface du plan *Pᵢ* délimitée par le cercle *C_{c}* est la surface du plan *Pᵢ* destinée à être traversée par le monofilament métallique au cours de son centrage par ladite portion de centrage 4. Les points du plan *Pᵢ* situés à l'extérieur du cercle *C_{c}* sont destinés à ne pas être traversés par ledit monofilament métallique au cours de son centrage par ladite portion de centrage 4.

Chaque portion de centrage 4 est délimitée par une pluralité de *m* surfaces de centrage avec *m* supérieur ou égal à 3. Les surfaces de centrage sont deux à deux disjointes les unes des autres, c'est-à-dire que les surfaces de centrage sont non-jointives deux-à-deux. Ainsi, dans le cas où deux surfaces de centrage d'une même portion de centrage sont, dans le plan *Pᵢ*, reliées l'une à l'autre par une courbe directrice d'une autre portion que la courbe directrice de la portion de centrage, chaque surface de centrage est alors séparée d'une autre surface par une autre surface ayant pour fonction une autre fonction que la fonction de centrage.

Comme illustré en figure 2, dans la section d'une portion de centrage 4 par le plan Pᵢ, une première surface de centrage 6a comprend un point de tangence 6ᵢₐ avec le cercle C_{c} une deuxième surface de centrage 6b comprend un point de tangence 6_{ib} avec le cercle C_{c} et une troisième surface de centrage 6c comprend un point de tangence 6_{ic} avec le cercle C_{c} Les trois points de tangence 6ᵢₐ, 6_{ib} ; 6_{ic} forment un triangle. De la même manière, si une portion de centrage 4a est délimitée par exactement quatre surfaces de centrage, alors les quatre points de tangence entre le cercle C_{c} et chacune des quatre surfaces de centrage forment un quadrilatère. Dans le cas général, les m surfaces de centrage sont configurées et agencées de manière à ce que les points de tangence forment un polygone à m côtés.

Avantageusement, la configuration particulière de chaque portion de centrage 4 et la répartition angulaire des surfaces de centrage 6a, 6b, 6c a pour effet de limiter globalement l'usure d'un monofilament métallique au cours de son défilement dans la portion de centrage 4a.

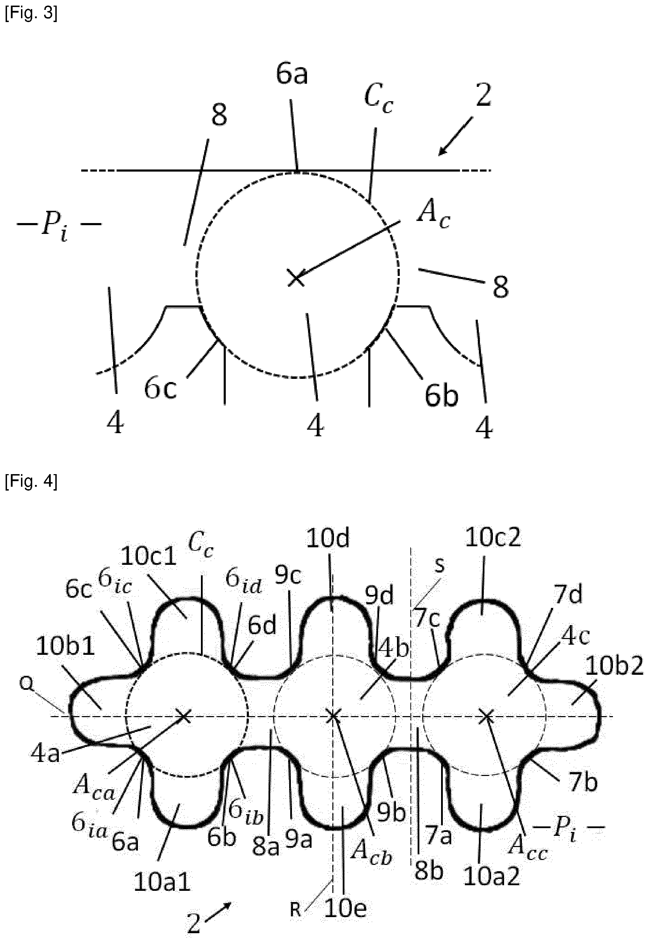

Comme illustré en figure 3, l'orifice de guidage 2 comprend en outre au moins une portion d'évacuation principale 8. La portion d'évacuation principale 8 est configurée pour évacuer un matériau issu de l'abrasion des monofilaments métalliques lors de leur passage entre les surfaces de centrage des portions de centrage adjacentes. La portion d'évacuation principale 8 forme un passage reliant entre elles au moins deux portions de centrage adjacentes. Chaque portion d'évacuation principale 8, qui forme un passage reliant entre elles deux portions de centrage adjacentes, est délimitée dans le plan *Pᵢ* par une courbe directrice ouverte.

Avantageusement, le bloc guide-fil selon l'invention permet de limiter le risque de rupture des monofilaments métalliques grâce à la configuration particulière de la portion d'évacuation principale 8 qui facilite l'évacuation de matière métallique issue de l'abrasion au cours du passage des monofilaments métalliques entre les surfaces de centrage 6a, 6b, 6c des portions de centrage 4a, 4b.

Selon un premier mode de réalisation particulier de l'invention illustré en figure 4, l'orifice de guidage 2 comprend trois portions de centrage 4a, 4b, 4c.

La portion de centrage 4a configurée pour centrer un monofilament métallique selon un axe de centrage *A_{ca}* comprend quatre surfaces de centrage 6a, 6b, 6c, 6d deux à deux disjointes les unes des autres. Dans une section de ladite portion de centrage 4a dans le plan *Pᵢ*, lesdites surfaces de centrage 6a, 6b, 6c, 6d sont réparties angulairement par rapport audit axe de centrage *A_{ca}.* On notera que, dans le plan *Pᵢ*, les points de tangence 6*ᵢₐ*, 6*_{ib}*, 6*_{ic}*, 6*_{id}* entre les surfaces de centrage 6a, 6b, 6c, 6d et le cercle *C_{c}* inscrit à la portion de centrage 4 forment un polygone convexe.

La portion de centrage 4c configurée pour centrer un monofilament métallique selon un axe de centrage *A_{cc}* comprend quatre surfaces de centrage 7a, 7b, 7c, 7d deux à deux disjointes les unes des autres. Dans une section de ladite portion de centrage 4b dans le plan *Pᵢ*, lesdites surfaces de centrage 7a, 7b, 7c, 7d sont agencées de façon axisymétrique par rapport audit axe de centrage *A_{cc}.*

La portion de centrage 4b configurée pour centrer un monofilament métallique selon un axe de centrage *A_{cb}* comprend quatre surfaces de centrage 9a, 9b, 9c, 9d deux à deux disjointes les unes des autres. Dans une section de ladite portion de centrage 4b dans le plan *Pᵢ*, lesdites surfaces de centrage 9a, 9b, 9c, 9d sont agencées de façon axisymétrique par rapport audit axe de centrage *A_{cb}.*

L'orifice de guidage 2 comprend également deux portions d'évacuation principales 8a, 8b formant un passage reliant entre elles au moins deux portions de centrage. Ici la portion d'évacuation principale 8a relie entre elles les portions de centrage 4a et 4b et la portion d'évacuation principale 8b relie entre elles les portions de centrage 4b et 4c.

De manière générale et comme illustré en figure 4, chaque portion d'évacuation principale 8a, 8b est délimitée, dans le plan *Pᵢ*, par une courbe directrice ouverte délimitée :
pour la portion d'évacuation principale 8a, par la paire de surfaces de centrage 6b, 6d de la portion de centrage 4a et la paire de surfaces de centrage 9a, 9c de la portion de centrage 4b,
pour la portion d'évacuation principale 8b, par la paire de surfaces de centrage 9b, 9d de la portion de centrage 4b et la paire de surfaces de centrage 7a, 7c de la portion de centrage 4c.

La distance la plus petite entre chaque surface de centrage de chaque paire 6b, 6d, 9a, 9c, 9b, 9d et 7a, 7c est inférieure à *r*₁ de façon à empêcher le passage du monofilament métallique depuis chaque portion de centrage 4a, 4b, 4c destinée à centrer chaque monofilament métallique dans la portion d'évacuation principale correspondante 8a, 8b.

L'orifice de guidage 2 peut comprendre au moins une portion d'évacuation complémentaire. Selon le premier mode de réalisation particulier de l'invention comme illustré en figure 4, l'orifice de guidage 2 comprend une pluralité de portions d'évacuation complémentaire 10a1, 10b1, 10c1, 10a2, 10b2, 10c2, 10d et 10e.

Chaque portion d'évacuation complémentaire 10a1, 10b1, 10c1 est délimitée, dans le plan *Pᵢ*, par une courbe directrice fermée reliant deux surfaces de centrage respectivement 6a et 6b, 6a et 6c, 6c et 6d de la même portion de centrage 4a l'une à l'autre et étant délimitée par ces mêmes surfaces de centrage 6a et 6b. Chaque portion d'évacuation complémentaire 10a1, 10b1, 10c1 débouche sur la seule portion de centrage 4a et est configurée pour permettre d'évacuer un matériau issu de l'abrasion d'un monofilament métallique lors de son passage entre les surfaces de centrage 6a, 6b, 6c, 6d de ladite portion de centrage 4a.

Chaque portion d'évacuation complémentaire 10a2, 10b2, 10c2 est délimitée , dans le plan *Pᵢ*, par une courbe directrice fermée reliant deux surfaces de centrage respectivement 7a et 7b, 7a et 7c, 7c et 7d de la même portion de centrage 4c l'une à l'autre et étant délimitées par ces mêmes surfaces de centrage 7a et 7b, 7a et 7c, 7c et 7d. Chaque portion d'évacuation complémentaire 10a2, 10b2, 10c2 débouche sur la seule portion de centrage 4c et est configurée pour permettre d'évacuer un matériau issu de l'abrasion d'un monofilament métallique lors de son passage entre les surfaces de centrage 7a, 7b, 7c, 7d de ladite portion de centrage 4c.

Chaque portion d'évacuation complémentaire 10d, 10e est délimitée, dans le plan *Pᵢ*, par une courbe directrice fermée reliant deux surfaces de centrage respectivement 9c et 9d, 9a et 9b de la même portion de centrage 4b l'une à l'autre et et étant délimitées par ces mêmes surfaces de centrage 9c et 9d, 9a et 9b. Chaque portion d'évacuation complémentaire 10d, 10e débouche sur la seule portion de centrage 4b et est configurée pour permettre d'évacuer un matériau issu de l'abrasion d'un monofilament métallique lors de son passage entre les surfaces de centrage 9a, 9b, 9c, 9d de ladite portion de centrage 4b.

De façon très avantageuse, la distance la plus petite entre chaque paire de surfaces de centrage de chaque courbe directrice délimitant chaque portion d'évacuation complémentaire est inférieure à *r*₁ de façon à empêcher le passage du monofilament métallique depuis la portion de centrage destinée à centrer le monofilament métallique dans la portion d'évacuation complémentaire. Ainsi, par exemple, la distance la plus petite entre les surfaces 9c et 9d délimitant la portion d'évacuation complémentaire 10d est inférieure à à *r*₁ de façon à empêcher le passage du monofilament métallique depuis la portion de centrage 4b destinée à centrer ce monofilament métallique dans la portion d'évacuation complémentaire 10d.

Avantageusement, de telles dimensions des portions d'évacuation principales ou complémentaires ont pour effet qu'un monofilament métallique circulant dans une portion de centrage 4a ne peut pas se déloger accidentellement et circuler dans une portion d'évacuation adjacente.

Au sens de l'invention, le ratio surfacique RS dans le plan *Pᵢ* de l'orifice de guidage 2 est le quotient de la somme des surfaces des portions de guidage 4a, 4b, 4c par la surface totale de l'orifice de guidage 2. En d'autres termes, le ratio surfacique RS désigne le rapport surfacique dans le plan *Pᵢ* entre d'une part les portions de guidage et d'autre part les portions de guidage, d'évacuation principale 8a, 8b et d'évacuation complémentaire 10a1, 10b1, 10c1, 10a2, 10b2, 10c2, 10d et 10e. Selon certains modes de réalisation, le ratio surfacique RS est supérieur ou égal à 0,51, de préférence supérieur ou égal à 0,53, plus préférentiellement supérieur ou égal à 0,57 et très préférentiellement supérieur ou égal à 0,60. De tels ratio RS permettent d'éviter la remontée d'aval en amont de l'orifice de guidage 2 d'une composition polymérique de gainage appliquée en aval de l'orifice de guidage sur les monofilaments métalliques.

Selon certains modes de réalisation, le ratio surfacique RS est inférieur ou égal à 0,90, de préférence inférieur ou égal à 0,80 plus préférentiellement inférieur ou égal à 0,75 et très préférentiellement inférieur ou égal à 0,70. De tels ratio RS permettent d'évacuer efficacement la matière métallique issue de l'abrasion au cours du passage des monofilaments métalliques dans l'orifice de guidage 2 et d'éviter les ruptures des monofilaments métalliques.

De façon très préférée, le ratio surfacique RS est supérieur ou égal à 0,51 et inférieur ou égal à 0,75, de préférence supérieur ou égal à 0,51 et inférieur ou égal à 0,70 et plus préférentiellement supérieur ou égal à 0,51 et inférieur ou égal à 0,60.

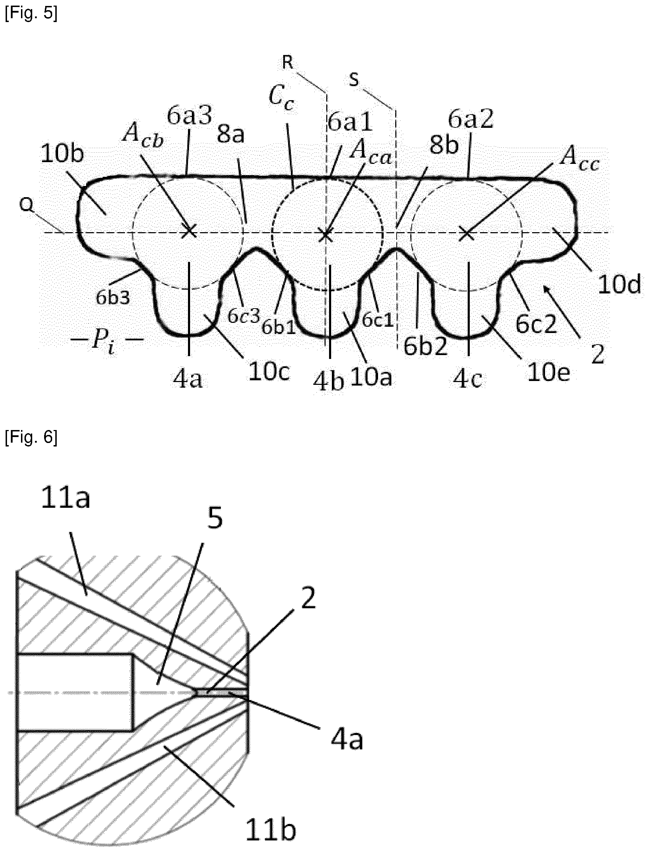

Selon un deuxième mode de réalisation particulier de l'invention illustré en figure 5, une première portion d'évacuation principale 8a forme un passage reliant une première portion de centrage 4a à une deuxième portion de centrage 4b, et une deuxième portion d'évacuation principale 8b forme un passage reliant la première portion de centrage 4b à une troisième portion de centrage 4c. L'orifice de guidage du deuxième mode de réalisation de la figure 5 comprend également cinq portions d'évacuation complémentaires 10a, 10b, 10c et 10d. Une première portion de centrage 4b, représentée au milieu en figure 5, est raccordée à une portion d'évacuation complémentaire 10a et est reliée à une deuxième portion de centrage 4a, représentée à gauche en figure 5 au moyen d'une première portion d'évacuation principale 8a et à une troisième portion de centrage 4c, représentée à droite en figure 5 au moyen d'une deuxième portion d'évacuation complémentaire 8b. La deuxième portion de centrage 4a est en outre raccordée aux deux portions d'évacuation complémentaires 10b, 10c. La troisième portion de centrage 4c est en outre raccordée aux deux portions d'évacuation complémentaires 10d, 10e.

Selon le deuxième mode de réalisation particulier de l'invention, la portion de centrage 4a comprend trois surfaces de centrage 6a3, 6b3, 6c3, la portion de centrage 4b comprend trois surfaces de centrage 6a1, 6b1, 6c1 et la portion de centrage 4c comprend trois surfaces de centrage 6a2, 6b2, 6c2.

Il résulte des définitions des portions d'évacuation, explicitées par les modes de réalisation exposés ci-dessus, que chaque surface de centrage est reliée à exactement deux portions d'évacuation, qui peuvent indifféremment être des portions d'évacuation principale ou complémentaire. Chaque surface de centrage d'une portion de centrage est, dans le plan *Pᵢ*, reliée à une autre surface de centrage soit par une courbe directrice d'une portion d'évacuation complémentaire dans le cas où l'autre surface de centrage délimite la même portion de centrage, soit par une courbe directrice d'une portion d'évacuation principale dans le cas où l'autre surface de centrage délimite une autre portion de centrage.

Par exemple, selon le premier mode de réalisation particulier de l'invention en figure 4, la surface de centrage 6a de la portion de centrage 4a est reliée à la surface de centrage 6c par la courbe directrice de la portion d'évacuation complémentaire 10b1 et à la surface de centrage 6b par la courbe directrice de la portion d'évacuation complémentaire 10a1. La surface de centrage 6b de la portion de centrage 4a est reliée à la surface de centrage 6a par la courbe directrice de la portion d'évacuation complémentaire 10a1 et à la surface de centrage 9a par la courbe directrice de la portion de centrage 4b.

Comme illustré par le deuxième mode de réalisation particulier de l'invention en figure 5, la surface de centrage 6a1 de la portion de centrage 4b est reliée à la surface de centrage 6a2 de la portion de centrage 4c par la courbe directrice de la portion d'évacuation principale 8b et à la surface de centrage 6a3 de la portion de centrage 4a par la courbe directrice de la portion d'évacuation principale 8a. On notera également, par exemple, que la surface de centrage 6b1 de la portion de centrage 4b est reliée à la surface de centrage 6c1 de cette même portion de centrage 4b par la courbe directrice de la portion d'évacuation complémentaire 10a et à la surface de centrage 6c2 de la portion de centrage 4a par la courbe directrice de la portion d'évacuation principale 8a.

Selon certains modes de réalisation, tel que représenté en figures 4 et 5, chaque portion de centrage 4a, 4b, 4c est reliée à au moins une autre portion de centrage par au moins une portion d'évacuation principale 8a, 8b, les portions de centrage 4a, 4b, 4c et d'évacuation principales 8a, 8b et complémentaires formant un réseau de portions de centrage reliées deux à deux par au moins une portion d'évacuation principale.

En particulier, en figure 4, trois portions de centrage 4a, 4b, 4c sont représentées, ainsi que deux portions d'évacuation principale 8a, 8b et huit portions d'évacuation complémentaires 10a1, 10b1, 10c1, 10a2, 10b2, 10c2, 10d et 10e. Une première portion de centrage 4b est reliée aux deux portions d'évacuation complémentaires 10d et 10e et est reliée à une deuxième portion de centrage 4a, représentée à gauche en figure 4 au moyen d'une première portion d'évacuation principale 8a et à une troisième portion de centrage 4c, représentée à droite en figure 4 au moyen d'une deuxième portion d'évacuation complémentaire 8b. La deuxième portion de centrage 4a est en outre reliée aux trois portions d'évacuation complémentaires 10a1, 10b1 et 10c1. La troisième portion de centrage 4c est en outre reliée aux trois portions d'évacuation complémentaires 10a2, 10b2 et 10c2.

De façon analogue dans le deuxième mode de réalisation représenté sur la figure 5, chaque portion de centrage 4a, 4b, 4c est reliée à au moins une autre portion de centrage par au moins une portion d'évacuation principale 8a, 8b, les portions de centrage 4a, 4b, 4c et d'évacuation principales 8a, 8b et complémentaires 10a, 10b, 10c, 10d, 10e formant un réseau de portions de centrage reliées deux à deux par au moins une portion d'évacuation principale.

Avantageusement, un tel réseau de portions de centrage permet l'évacuation d'un matériau issu de l'abrasion de trois monofilaments métalliques lors de leur passage entre les surfaces de centrage respectives des portions de centrage, le matériau issu de l'abrasion de chacun des monofilaments métalliques étant évacué par un nombre identique de portions d'évacuation.

Selon certains modes de réalisation comme illustré en figures 1 à 5, les axes de centrage *A_{ca}, A_{cb}, A_{cc}* des portions de centrage 4a, 4b, 4c sont sensiblement parallèles entre eux.

Selon certains modes de réalisation, les axes de centrage respectifs *A_{ca}, A_{cb}, A_{cc}* des portions de centrage 4a, 4b, 4c sont, dans le plan *Pᵢ*, sensiblement alignés les uns avec les autres selon une direction d'alignement. En d'autres termes, selon ces modes de réalisation, il existe un plan *Q* orthogonal au plan *Pᵢ* comprenant chaque axe de centrage *A_{c}.*

Chaque portion de centrage 4a, 4b, 4c est délimitée, dans le plan *Pᵢ*, par une courbe directrice ouverte correspondant à l'ensemble des surfaces de centrage de la portion de centrage. Selon certains modes de réalisation et comme illustré en figure 4, cette courbe directrice ouverte est sensiblement symétrique par rapport au plan *Q*.

Chaque portion d'évacuation principale est délimitée dans le plan *Pᵢ* par une courbe directrice ouverte. Selon certains modes de réalisation et comme illustré en figure 4, cette courbe directrice ouverte peut être sensiblement symétrique par rapport au plan *Q*. En d'autres termes, selon ces modes de réalisation, le centre du cercle inscrit à une, ou à chaque, portion d'évacuation principale dans le plan *Pᵢ* peut être également situé dans le plan *Q*.

Selon certains modes de réalisation et comme illustré en figure 4 et 5, le réseau de portions de centrage comprenant les portions de centrage 4a, 4b, 4c, les portions d'évacuation principale 8a, 8b et les portions d'évacuation complémentaire est, dans le plan *Pᵢ*, délimité par une courbe directrice sensiblement symétrique par rapport au plan *Q*.

Selon certains modes de réalisation et comme illustré en figures 4 et 5, chaque portion de centrage 4a, 4b, 4c peut être délimitée par une courbe directrice symétrique par rapport à un plan *R* perpendiculaire à la fois au plan *Pᵢ* et au plan *Q*. Avantageusement, une telle symétrie de la portion de centrage permet une répartition uniforme des forces de frottement sur l'ensemble des surfaces de centrage de ladite portion de centrage.

Selon certains modes de réalisation comme illustré en figure 4 et 5, chaque portion d'évacuation principale 8a, 8b peut être délimitée dans le plan *Pᵢ* par une courbe directrice symétrique par rapport à un plan *S* perpendiculaire à la fois au plan *Pᵢ* et au plan *Q* . Avantageusement, une telle symétrie de la portion d'évacuation principale permet l'évacuation uniforme d'un matériau métallique depuis deux portions de centrage adjacentes.

Selon certains modes de réalisation, le réseau de portions de centrage comprenant les portions de centrage 4a, 4b, 4c, les portions d'évacuation principale 8a, 8b et les portions d'évacuation complémentaire est, dans le plan *Pᵢ*, délimité par une courbe directrice sensiblement symétrique par rapport à un plan perpendiculaire à la fois au plan *Pᵢ* et au plan *Q*.

Selon certains modes de réalisation, au moins une paroi interne de l'orifice de guidage 2 est polie. Si au moins une surface de centrage est polie, alors les forces de frottements exercées par cette surface de centrage sur un monofilament métallique défilant le long de la surface de centrage sont minimisées, la quantité de matériau métallique à évacuer est également minimisée, et le risque de rupture du monofilament métallique est également minimisé.

De plus, si au moins une paroi d'une portion d'évacuation principale et/ou au moins une paroi d'une portion d'évacuation complémentaire est polie, alors une telle paroi est moins susceptible de retenir un matériau métallique destiné à être évacué par une telle portion, ainsi l'évacuation du matériau métallique est facilitée.

L'invention se rapporte également à un dispositif de gainage comprenant un guide-fil tel que décrit ci-dessus et comprenant un canal d'alimentation configuré pour acheminer une composition polymérique de gainage en sortie de chaque portion de centrage.

Le dispositif peut comprendre un premier canal d'alimentation 11a et un deuxième canal d'alimentation 11b, chacun des premier et deuxième canaux d'alimentation étant configurés pour acheminer la composition polymérique de gainage en sortie de chaque portion de centrage 4a, 4b, 4c, le premier canal d'alimentation 11a et le deuxième canal d'alimentation 11b étant agencés de part et d'autre de chaque portion de centrage 4a, 4b, 4c. Au moins un des premier 11a et deuxième 11b canaux d'alimentation d'une composition polymérique peut être agencé, tel qu'illustré sur la figure 6, de façon à revêtir collectivement la pluralité de monofilaments métalliques en sortie des portions de centrage 4a, 4b, 4c.

Les intersections entre les axes de centrage *A_{ca}, A_{cb}, A_{cc}* des portions de centrage 4a, 4b, 4c et le plan *Pᵢ*, sensiblement alignées les unes avec les autres selon une direction d'alignement, le premier canal d'alimentation 11a étant agencé d'un côté du plan *Q* orthogonal au plan *Pᵢ* comprenant chaque axe de centrage *A_{ca}, A_{cb}, A_{cc}* et le deuxième canal d'alimentation 11b est agencé de l'autre côté du plan *Q*. En d'autres termes, le premier canal d'alimentation 11a traverse une première partie du dispositif, le deuxième canal d'alimentation 11b traverse une deuxième partie du dispositif, et chaque portion de centrage 4a, 4b, 4c traverse une partie intermédiaire du dispositif, situé entre ladite première partie et ladite deuxième partie.

Chaque canal d'alimentation 11a, 11b peut être agencé de façon à revêtir collectivement la pluralité de monofilaments métalliques en sortie des portions de centrages 4a, 4b, 4c.

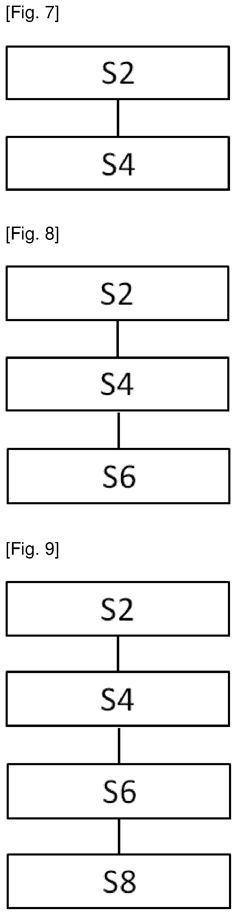

L'invention se rapporte également à un procédé de centrage d'une pluralité d'éléments filaires métalliques tel qu'illustré sur la figure 7.

Ce procédé comporte une étape de fourniture S2 d'une pluralité d'éléments filaires métalliques. L'élément filaire métallique peut par exemple être initialement enroulé sous la forme d'une bobine. Au cours de l'étape de fourniture S2, l'élément filaire métallique peut par exemple être entraîné par un cabestan dans une direction déterminée et selon un sens de défilement déterminé.

Selon certains modes de réalisation, chaque élément filaire métallique fourni au cours de l'étape de fourniture S2 est de rayon *r*₁.

Ce procédé comporte également une étape de centrage S4 des éléments filaires métalliques à travers un bloc guide-fil selon l'invention. Au cours de l'étape de centrage S4, les éléments filaires métalliques défilent de façon à traverser l'orifice de guidage 2, chaque élément filaire métallique traversant une portion de centrage 4a, 4b, 4c respective du bloc guide-fil.

Avantageusement, le procédé selon l'invention permet de centrer une pluralité d'éléments filaires métalliques.

L'invention se rapporte également à un procédé de fabrication d'une bandelette comprenant une pluralité d'éléments filaires métalliques revêtus collectivement par une composition polymérique tel qu'illustré sur la figure 8.

Ce procédé de fabrication comprend un procédé de centrage selon l'invention.

Ce procédé de fabrication comprend en outre une étape de revêtement S6 de collectif de la pluralité d'éléments filaires métalliques par la composition polymérique. Chaque élément filaire métallique est revêtu par la composition polymérique après avoir traversé la portion de centrage du guide-fil. La composition polymérique peut être acheminée jusqu'à chaque élément filaire métallique par le biais d'un ou de plusieurs canaux d'alimentation 11a, 11b d'un dispositif tel que décrit précédemment. Selon certains modes de réalisation, l'étape de centrage S4 et l'étape de revêtement S6 peuvent être réalisées simultanément. Selon certains modes de réalisation, l'étape de centrage S4 et l'étape de revêtement S6 peuvent être réalisée par le dispositif de gainage tel que décrit ci-dessus.

La composition polymérique est préférentiellement une composition polymérique thermoplastique. De préférence, la composition polymérique comprend un polymère thermoplastique. Dans une variante, le polymère thermoplastique est un polyamide aliphatique ou un copolyamide aliphatique, par exemple le nylon 6.6. Dans une variante, le polymère thermoplastique est un élastomère thermoplastique, de préférence insaturé, par exemple un élastomère styrénique thermoplastique insaturé. La composition polymérique peut comprendre tout ou partie des additifs habituellement utilisés dans les compositions utilisées dans le domaine du pneumatique. Des exemples de telles compositions polymériques thermoplastiques sont notamment décrits dans WO2010/136389, WO2010/105975, WO2011/012521, WO2011/051204, WO2012/016757, WO2012/038340, WO2012/038341, WO2012/069346, WO2012/104279, WO2012/104280 et WO2012/104281.

L'invention se rapporte également à un procédé de fabrication tel qu'illustré sur la figure 9 d'un produit renforcé par extrusion.

Ce procédé de fabrication comprend les étapes d'un procédé de fabrication d'un ou de plusieurs éléments filaires métalliques gainés.

Le procédé de fabrication comprend en outre, après l'étape de centrage S4 et l'étape de revêtement S6, une étape de noyage S8 de chaque élément filaire métallique revêtu de la composition polymérique dans une matrice d'élastomère.

Grâce à la précision de l'étape de centrage S4, la distance entre chaque élément filaire métallique gainé et la surface libre de la nappe peut être finement contrôlée au cours de l'étape de noyage S8. De plus, la distance entre deux éléments filaires métalliques gainés voisins peut être finement contrôlée au cours de l'étape de revêtement S6.

L'invention se rapporte également à un procédé de fabrication d'un pneumatique comprenant les étapes d'un procédé selon l'invention.

L'utilisation d'un guide-fil selon l'invention peut comprendre l'utilisation d'un bloc guide-fil correspondant à l'invention pour le centrage d'une pluralité d'éléments filaires métalliques. Selon certains modes de réalisation, chaque élément filaire métallique est de rayon *r*₁.

Dans les procédés, utilisation et pneumatique décrits ci-dessus et comme déjà indiqué, on pourra utiliser des éléments filaires métalliques constitués de monofilaments métalliques et/ou d'assemblages de monofilaments métalliques. Ainsi, dans un mode de réalisation, on pourra utiliser un ou plusieurs monofilaments métalliques et un ou plusieurs assemblages de monofilaments métalliques. Dans un autre mode de réalisation, celui-ci préféré, on pourra utiliser au moins un monofilament métallique, c'est-à-dire qu'au moins un élément filaire métallique est constitué d'un monofilament métallique. Dans un autre mode de réalisation, celui-ci encore plus préféré, on pourra utiliser uniquement des monofilaments métalliques, c'est-à-dire que chaque élément filaire métallique est constitué d'un monofilament métallique. Dans encore un autre mode de réalisation, on pourra utiliser uniquement des assemblages de monofilaments métalliques, c'est-à-dire que chaque élément filaire métallique est constitué d'un assemblage de monofilaments métalliques.

### EXEMPLES

Douze blocs guide-fil ont été réalisés et testés pour le centrage d'éléments filaires métalliques, ici de monofilaments métalliques, de rayon *r*₁ = 0,16 mm. Chacun des douze blocs guide-fils testés comporte trois portions de centrage identiques entre elles.

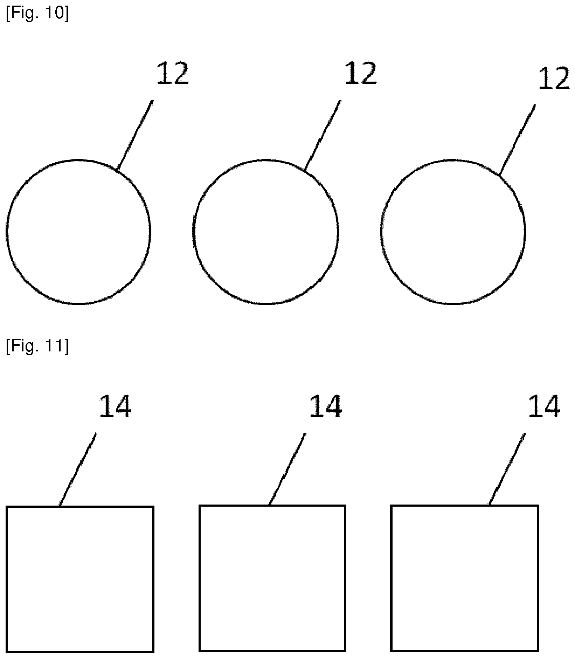

Le guide-fil n°1, représenté sur la figure 10, comporte trois portions de centrage 12 cylindriques de courbe directrice, dans le un plan *Pᵢ*, circulaire de rayon *r*₂ égal à 0,20 mm, et ne comporte aucune portion d'évacuation principale au sens de l'invention.

Le bloc guide-fil n°2 diffère du bloc guide-fil n°1 uniquement en ce que le rayon *r*₂ des courbes directrices des portions de centrage est de 0,18 mm.

Le bloc guide-fil n°3, représenté sur la figure 11, comporte trois portions de centrage 14 de courbe directrice, dans le plan *Pᵢ*, carrée ayant un cercle inscrit *r*₂ de rayon égal à 0,18 mm.

Le bloc guide-fil n°4 correspond au premier mode de réalisation particulier de l'invention tel qu'illustré en figure 4, chaque portion de centrage 4 étant, dans le plan *Pᵢ*, inscrite dans un cercle *C_{c}* de rayon *r*₂ égal à 0,18 mm.

Le bloc guide-fil n°5 diffère du bloc guide-fil n°4 uniquement en ce que le rayon *r*₂ du cercle *C*_{c} est égal à 0,17 mm.

Le bloc guide-fil n°6 correspond au deuxième mode de réalisation particulier de l'invention tel qu'illustré en figure 5, chaque portion de centrage 4 étant inscrite, dans le plan *Pᵢ*, dans un cercle *C*_{c} de rayon *r*₂ égal à 0,18 mm.

Le guide-fil n°7 diffère du bloc guide-fil n°6 uniquement en ce que le rayon *r*₂ du cercle *C*_{c} est égal à 0,17 mm.

Le bloc guide fil n°8 diffère du bloc guide-fil n°5 uniquement de part son ratio surfacique RS.

Le bloc guide fil n°9 diffère du bloc guide fil n°5 de par le rayon *r*₂ du cercle *C*_{c} qui est égal à 0,165 mm et le ratio surfacique RS.

Le bloc guide fil n°10 diffère du bloc guide fil n°9 uniquement de par le ratio surfacique RS.

Le bloc guide fil n°11 diffère du bloc guide fil n°5 uniquement de par le ratio surfacique RS.

Le bloc guide fil n°12 diffère du bloc guide fil n°5 uniquement de par le ratio surfacique RS.

Au cours des tests, la performance des blocs guide-fils a été évaluée qualitativement sur la base des critères suivants : précision du centrage (centrage), robustesse en termes de prévention de la rupture de monofilaments métalliques (robustesse) et limitation de la fuite de composition polymérique au travers de l'orifice de guidage (fuite). Les résultats sont fournis dans le tableau 1 ci-dessous, où le premier bloc guide-fil a le rôle de témoin et les autres blocs guide-fils sont comparés au témoin, chaque signe + indiquant de meilleures performances, et chaque signe - indiquant de moins bonnes performances. On a également indiqué dans le tableau 1, les valeurs de *r*₂, de la somme SU des surfaces des cercles inscrits aux portions de centrage, de la surface de l'orifice SO et du ratio surfacique RS.

**[Table 1]**

| Numéro du bloc guide-fil | *r*₂ (mm) | SU (mm²) | SO (mm²) | RS | Centrage | Robustesse | Fuite |
|---|---|---|---|---|---|---|---|
| 1 | 0,20 | 0,377 | 0,377 | 1 | = | = | ++ |
| 2 | 0,18 | 0,305 | 0,305 | 1 | ++ | -- | ++ |
| 3 | 0,18 | 0,305 | 0,389 | 0,78 | ++ | -- | ++ |
| 4 | 0,18 | 0,305 | 0,668 | 0,46 | + | ++ | -- |
| 5 | 0,17 | 0,272 | 0,572 | 0,48 | ++ | +++ | -- |
| 6 | 0,18 | 0,305 | 0,655 | 0,47 | -- | +++ | -- |
| 7 | 0,17 | 0,272 | 0,623 | 0,44 | + | +++ | -- |
| 8 | 0,17 | 0,272 | 0,380 | 0,72 | + | = | ++ |
| 9 | 0,165 | 0,257 | 0,524 | 0,49 | +++ | +++ | -- |
| 10 | 0,165 | 0,257 | 0,332 | 0,77 | +++ | = | ++ |
| 11 | 0,17 | 0,272 | 0,540 | 0,50 | ++ | ++ | -- |
| 12 | 0,17 | 0,272 | 0,460 | 0,59 | ++ | + | ++ |

En termes de robustesse, à l'exception des blocs guide-fils n°8 et 10, tous les blocs guides-fils conformes à l'invention présentent une robustesse améliorée par rapport aux blocs guide-fils n° 1 à 3. Les blocs guide-fils n°8 et 10 présentent certes une robustesse égale à celle du bloc guide-fils n°1 mais présente un centrage nettement amélioré de sorte que le compromis entre le centrage et la robustesse est bien meilleur pour les blocs guide-fils n°8 et 10 que pour le bloc guide-fil n°1. Si le bloc guide-fil n°6 présente un centrage moindre que les blocs guide-fils n° 1 à 3, la robustesse est largement améliorée de sorte que le compromis entre le centrage et la robustesse est bien meilleur pour le bloc guide-fil n°6 que pour les blocs guide-fils n°1 à 3.

Le compromis amélioré est la conséquence d'un rayon *r*₂le plus ajusté au rayon *r*₁, c'est- à-dire vérifiant *r*₂ supérieur ou égal à 1,03*r*₁ et inférieur ou égal à 1,20 *r*₁ et de l'existence de la portion d'évacuation principale permettant d'évacuer le matériau issu de l'abrasion. L'invention consiste à faire assurer les fonctions de centrage et d'évacuation par des portions distinctes, ici respectivement par les portions de centrage et d'évacuation contrairement aux guide-fils n°1 à 3 dans lesquels les deux fonctions de centrage et d'évacuation sont assurées par la même portion. On notera également, de façon très avantageuse, que la meilleure robustesse est obtenue pour des ratios surfaciques RS inférieurs à 0,80, de préférence à 0,75 et plus préférentiellement à 0,70.

On notera également, de façon très avantageuse, que en améliorant le compromis entre robustesse et centrage, on risque de créer trop d'espace pour le passage d'aval en amont de la composition polymérique si bien qu'afin de limiter cette fuite, il est préférable de limiter la surface des portions d'évacuations principales et complémentaires par rapport à la surface de l'orifice. Ainsi, la meilleure limitation de fuite est obtenue pour des ratios surfaciques RS supérieurs à 0,51, de préférence à 0,53, plus préférentiellement à 0,57 et très préférentiellement à 0,60.

Ainsi, on notera que le bloc guide-fil présentant le meilleur compromis entre centrage, robustesse et limitation de fuite est le bloc-guide-fil n°12. Dans ce cas, le ratio surfacique RS est supérieur ou égal à 0,51 et inférieur ou égal à 0,75, de préférence supérieur ou égal à 0,51 et inférieur ou égal à 0,70 et plus préférentiellement supérieur ou égal à 0,51 et inférieur ou égal à 0,60 et ici égal à 0,59.

L'invention a été décrite ci-dessus avec l'aide de modes de réalisation

Bien d'autres modifications et variations se suggèrent d'elles même à l'homme du métier, après réflexion sur les différents modes de réalisation illustrés dans cette demande. Ces modes de réalisation sont donnés à titre d'exemple et ne sont pas destinés à limiter la portée de l'invention, qui est déterminée exclusivement par les revendications ci-dessous.

Dans les revendications, le mot « comprenant » n'exclut pas d'autres éléments ou étapes, et l'utilisation de l'article indéfini « un » ou « une » n'exclut pas une pluralité.

## Revendications

1. Bloc guide-fil comprenant un orifice de guidage (2) d'une pluralité n d'éléments filaires métalliques k, chaque élément filaire métallique k étant de rayon r_{1,k}, l'orifice de guidage (2) comprenant :
- une pluralité de n portions de centrage (4), chaque portion de centrage (4) étant configurée pour centrer un élément filaire métallique k selon un axe de centrage A_{c} orthogonal à un plan Pᵢ de sortie de l'élément filaire métallique, chaque portion de centrage étant inscrite, dans le plan Pᵢ, dans un cercle Cᵢ centré sur un point de l'axe de centrage A_{c} et de rayon r_{2,k} supérieur ou égal à 1,03 r_{1,k} et inférieur ou égal à 1,20 r_{1,k}, chaque portion de centrage (4) étant délimitée par au moins trois surfaces de centrage tangentes au cercle Cᵢ, les surfaces de centrage étant deux à deux disjointes les unes des autres,
- au moins une portion d'évacuation principale (8) configurée pour évacuer un matériau issu de l'abrasion des éléments filaires métalliques lors de leur passage entre les surfaces de centrage des portions de centrage,
ladite portion d'évacuation principale (8) formant un passage reliant entre elles au moins deux portions de centrage (4).

2. Bloc guide-fil selon la revendication précédente, dans lequel le ratio surfacique RS correspondant, dans le plan Pᵢ, au quotient de la somme des surfaces des cercles inscrits aux portions de centrage (4) par la surface de l'orifice de guidage (2), est supérieur ou égal à 0,51, de préférence supérieur ou égal à 0,53, plus préférentiellement supérieur ou égal à 0,57 et très préférentiellement supérieur ou égal à 0,60.

3. Bloc guide-fil selon la revendication précédente, dans lequel le ratio surfacique RS correspondant, dans le plan Pᵢ, au quotient de la somme des surfaces des cercles inscrits aux portions de centrage (4) par la surface de l'orifice de guidage (2), est inférieur ou égal à 0,90, de préférence inférieur ou égal à 0,80, plus préférentiellement inférieur ou égal à 0,75 et très préférentiellement inférieur ou égal à 0,70.

4. Bloc guide-fil selon l'une quelconque des revendications précédentes, dans lequel :
- une première portion d'évacuation principale (8a) forme un passage reliant une première portion de centrage (4b) à une deuxième portion de centrage (4a), et
- une deuxième portion d'évacuation principale (8b) forme un passage reliant la première portion de centrage (4b) à une troisième portion de centrage (4c).

5. Bloc guide-fil selon l'une quelconque des revendications précédentes, dans lequel chaque portion d'évacuation principale (8a) est délimitée par une courbe directrice ouverte délimitée par:
- une première paire de surfaces de centrage (9a, 9c) d'une première portion de centrage (4a),
- une deuxième paire de surfaces de centrage (6d, 6b) d'une deuxième portion de centrage (4b), la portion d'évacuation principale (8a) formant le passage reliant entre elles la première et la deuxième portion de centrage (4a, 4b),
la distance la plus petite entre chaque surface de centrage de chaque première et deuxième paire (6b, 6d, 9a, 9c) étant inférieure à chaque rayon r_{1,k} de chaque élément filaire métallique k destiné à être centré respectivement dans chaque première et deuxième portion de centrage (4a, 4b) de façon à empêcher le passage de l'élément filaire métallique depuis chaque portion de centrage (4a, 4b) dans la portion d'évacuation principale (8a).

6. Bloc guide-fil selon l'une quelconque des revendications précédentes, dans lequel l'orifice de guidage (2) comprend au moins une portion d'évacuation complémentaire (10a1, 10b1, 10c1), chaque portion d'évacuation complémentaire (10a1, 10b1, 10c1) étant délimitée par une courbe directrice fermée reliant deux surfaces de centrage (6a et 6b, 6a et 6c, 6c et 6d) d'une même portion de centrage (4a) l'une à l'autre et délimitée par ces deux surfaces de centrage (6a et 6b, 6a et 6c, 6c et 6d) de cette même portion de centrage (4a).

7. Bloc guide-fil selon la revendication précédente, dans lequel chaque surface de centrage (6a, 6b, 6c, 6d) d'une portion de centrage (4a) est, dans le plan Pᵢ, reliée à une autre surface de centrage (6a, 6b, 6c, 6d, 9a, 9c) :
- par une courbe directrice d'une portion d'évacuation complémentaire (10a1, 10b1, 10c1) dans le cas où l'autre surface de centrage (6a, 6b, 6c, 6d) délimite la même portion de centrage (4a), et
- par une courbe directrice d'une portion d'évacuation principale (8a) dans le cas où l'autre surface de centrage (9a, 9c) délimite une autre portion de centrage (4b).

8. Bloc guide-fil selon la revendication précédente, dans lequel la distance la plus petite entre les deux surfaces de centrage (6a et 6b, 6a et 6c, 6c et 6d) de la courbe directrice délimitant la portion d'évacuation complémentaire (10a1, 10b1, 10c1) est inférieure à r_{1,k} de façon à empêcher le passage de l'élément filaire métallique k depuis la portion de centrage (4a) destinée à centrer l'élément filaire métallique k dans la portion d'évacuation complémentaire (10a1, 10b1, 10c1).

9. Dispositif de gainage comprenant un bloc guide-fil selon l'une quelconque des revendications précédentes, comprenant un canal d'alimentation configuré pour acheminer une composition polymérique de gainage en sortie de chaque portion de centrage.

10. Procédé de centrage d'une pluralité d'éléments filaires métalliques, comportant au moins :
- une étape de fourniture d'une pluralité d'éléments filaires métalliques et
- une étape de centrage de chaque élément filaire métallique à travers une portion de centrage (4) respective d'un bloc guide-fil selon l'une quelconque des revendications 1 à 8.

11. Procédé de fabrication d'une bandelette comprenant une pluralité d'éléments filaires métalliques revêtus collectivement par une composition polymérique, le procédé comprenant :
- un procédé de centrage de la pluralité d'éléments filaires métalliques selon la revendication précédente,
- puis, une étape de revêtement collectif de la pluralité d'éléments filaires métalliques par la composition polymérique

12. Procédé de fabrication d'un produit renforcé par extrusion, comprenant les étapes d'un procédé de fabrication d'une bandelette selon la revendication précédente, et comprenant, en aval de l'étape de revêtement collectif de la pluralité d'éléments filaires métalliques par la composition polymérique, une étape de noyage de la bandelette dans une matrice d'élastomère.

13. Procédé de fabrication d'un pneumatique comprenant les étapes d'au moins un procédé selon l'une quelconque des revendications 10 à 12.

14. Utilisation d'un bloc guide-fil correspondant à l'une des revendications 1 à 8 pour le centrage d'une pluralité d'éléments filaires métalliques.

15. Ensemble comprenant un bloc guide-fil selon l'une des revendications 1 à 8 et une pluralité d'éléments filaires métalliques k de rayon r_{1,k}, chaque élément filaire métallique k étant destiné à être centré respectivement par une portion de centrage (4) du bloc guide-fil. 1

## Patentansprüche

1. Drahtführungsblock, umfassend eine Führungsöffnung (2) für eine Mehrzahl n von Metalldrahtelementen k, wobei jedes Metalldrahtelement k den Radius r_{1,k} hat, wobei die Führungsöffnung (2) umfasst:
- eine Mehrzahl von n Zentrierabschnitten (4), wobei jeder Zentrierabschnitt (4) dazu ausgestaltet ist, ein Metalldrahtelement k entlang einer Zentrierachse A_{c} zu zentrieren, die senkrecht zu einer Austrittsebene Pᵢ des Metalldrahtelements verläuft, wobei jeder Zentrierabschnitt, in der Ebene Pᵢ, in einen Kreis Cᵢ einbeschrieben ist, der auf einen Punkt der Zentrierachse A_{c} zentriert ist und den Radius r_{2,k} hat, der größer als oder gleich 1,03 r_{1,k} und kleiner als oder gleich 1,20 r_{1,k} ist, wobei jeder Zentrierabschnitt (4) durch mindestens drei den Kreis Cᵢ tangierende Zentrierflächen begrenzt wird, wobei die Zentrierflächen paarweise disjunkt voneinander sind,
- mindestens einen Hauptaustragabschnitt (8), der dazu ausgestaltet ist, ein aus dem Abrieb der Metalldrahtelemente bei ihrem Durchgang zwischen den Zentrierflächen der Zentrierabschnitte hervorgegangenes Material auszutragen, wobei der Hauptaustragabschnitt (8) einen Durchgang bildet, der mindestens zwei Zentrierabschnitte (4) untereinander verbindet.

2. Drahtführungsblock nach dem vorhergehenden Anspruch, bei dem das Flächenverhältnis RS, das, in der Ebene Pᵢ, dem Quotienten aus der Summe der Flächen der in die Zentrierabschnitte (4) einbeschriebenen Kreise und der Fläche der Führungsöffnung (2) entspricht, größer als oder gleich 0,51, bevorzugt größer als oder gleich 0,53, noch bevorzugter größer als oder gleich 0,57 und besonders bevorzugt größer als oder gleich 0,60 ist.

3. Drahtführungsblock nach dem vorhergehenden Anspruch, bei dem das Flächenverhältnis RS, das, in der Ebene Pᵢ, dem Quotienten aus der Summe der Flächen der in die Zentrierabschnitte (4) einbeschriebenen Kreise und der Fläche der Führungsöffnung (2) entspricht, kleiner als oder gleich 0,90, bevorzugt kleiner als oder gleich 0,80, noch bevorzugter kleiner als oder gleich 0,75 und besonders bevorzugt kleiner als oder gleich 0,70 ist.

4. Drahtführungsblock nach einem der vorhergehenden Ansprüche, bei dem:
- ein erster Hauptaustragabschnitt (8a) einen Durchgang bildet, der einen ersten Zentrierabschnitt (4b) mit einem zweiten Zentrierabschnitt (4a) verbindet, und
- ein zweiter Hauptaustragabschnitt (8b) einen Durchgang bildet, der den ersten Zentrierabschnitt (4b) mit einem dritten Zentrierabschnitt (4c) verbindet.

5. Drahtführungsblock nach einem der vorhergehenden Ansprüche, bei dem jeder Hauptaustragabschnitt (8a) durch eine offene Leitkurve begrenzt wird, die begrenzt wird durch:
- ein erstes Paar Zentrierflächen (9a, 9c) eines ersten Zentrierabschnitts (4a),
- ein zweites Paar Zentrierflächen (6d, 6b) eines zweiten Zentrierabschnitts (4b), wobei der Hauptaustragabschnitt (8a) den Durchgang bildet, der den ersten und den zweiten Zentrierabschnitt (4a, 4b) untereinander verbindet,
wobei der kleinste Abstand zwischen jeder Zentrierfläche jedes ersten und zweiten Paars (6b, 6d, 9a, 9c) kleiner als jeder Radius r_{1,k} jedes Metalldrahtelements k ist, das jeweils in jedem ersten und zweiten Zentrierabschnitt (4a, 4b) zentriert werden soll, so dass der Durchgang des Metalldrahtelements von jedem Zentrierabschnitt (4a, 4b) aus in den Hauptaustragabschnitt (8a) verhindert wird.

6. Drahtführungsblock nach einem der vorhergehenden Ansprüche, bei dem die Führungsöffnung (2) mindestens einen ergänzenden Austragabschnitt (10a1, 10b1, 10c1) umfasst, wobei jeder ergänzende Austragabschnitt (10a1, 10b1, 10c1) durch eine geschlossene Leitkurve begrenzt wird, die zwei Zentrierflächen (6a und 6b, 6a und 6c, 6c und 6d) eines selben Zentrierabschnitts (4a) miteinander verbindet und durch diese beiden Zentrierflächen (6a und 6b, 6a und 6c, 6c und 6d) dieses selben Zentrierabschnitts (4a) begrenzt wird.

7. Drahtführungsblock nach dem vorhergehenden Anspruch, bei dem jede Zentrierfläche (6a, 6b, 6c, 6d) eines Zentrierabschnitts (4a), in der Ebene Pᵢ, mit einer anderen Zentrierfläche (6a, 6b, 6c, 6d, 9a, 9c) verbunden ist:
- durch eine Leitkurve eines ergänzenden Austragabschnitts (10a1,10b1, 10c1) in dem Fall, in dem die andere Zentrierfläche (6a, 6b, 6c, 6d) denselben Zentrierabschnitt (4a) begrenzt, und
- durch eine Leitkurve eines Hauptaustragabschnitts (8a) in dem Fall, in dem die andere Zentrierfläche (9a, 9c) einen anderen Zentrierabschnitt (4b) begrenzt.

8. Drahtführungsblock nach dem vorhergehenden Anspruch, bei dem der kleinste Abstand zwischen den beiden Zentrierflächen (6a und 6b, 6a und 6c, 6c und 6d) der Leitkurve, die den ergänzenden Austragabschnitt (10a1, 10b1, 10c1) begrenzt, kleiner als r_{1,k} ist, so dass der Durchgang des Metalldrahtelements k von dem Zentrierabschnitt (4a) aus, der das Metalldrahtelement k zentrieren soll, in den ergänzenden Austragabschnitt (10a1,10b1, 10c1) verhindert wird.

9. Ummantelungsvorrichtung, umfassend einen Drahtführungsblock nach einem der vorhergehenden Ansprüche, umfassend einen Zuführungskanal, der dazu ausgestaltet ist, eine Polymerzusammensetzung zur Ummantelung zum Auslass jedes Zentrierabschnitts zu befördern.

10. Verfahren zum Zentrieren einer Mehrzahl von Metalldrahtelementen, beinhaltend mindestens:
- einen Schritt des Bereitstellens einer Mehrzahl von Metalldrahtelementen und
- einen Schritt des Zentrierens jedes Metalldrahtelements durch einen jeweiligen Zentrierabschnitt (4) eines Drahtführungsblocks nach einem der Ansprüche 1 bis 8 hindurch.

11. Verfahren zur Herstellung eines Streifens, umfassend eine Mehrzahl von Metalldrahtelementen, die gemeinsam mit einer Polymerzusammensetzung überzogen sind, wobei das Verfahren umfasst:
- ein Verfahren zum Zentrieren der Mehrzahl von Metalldrahtelementen nach dem vorhergehenden Anspruch,
- dann einen Schritt des gemeinsamen Überziehens der Mehrzahl von Metalldrahtelementen mit der Polymerzusammensetzung.

12. Verfahren zur Herstellung eines verstärkten Produkts durch Extrusion, umfassend die Schritte eines Verfahrens zur Herstellung eines Streifens nach dem vorhergehenden Anspruch und umfassend, dem Schritt des gemeinsamen Überziehens der Mehrzahl von Metalldrahtelementen mit der Polymerzusammensetzung nachgelagert, einen Schritt des Einbettens des Streifens in eine Elastomermatrix.

13. Verfahren zur Herstellung eines Reifens, umfassend die Schritte mindestens eines Verfahrens nach einem der Ansprüche 10 bis 12.

14. Verwendung eines Drahtführungsblocks, der einem der Ansprüche 1 bis 8 entspricht, zum Zentrieren einer Mehrzahl von Metalldrahtelementen.

15. Anordnung, umfassend einen Drahtführungsblock nach einem der Ansprüche 1 bis 8 und eine Mehrzahl von Metalldrahtelementen k mit dem Radius r_{1,k}, wobei jedes Metalldrahtelement k dazu bestimmt ist, jeweils durch einen Zentrierabschnitt (4) des Drahtführungsblocks zentriert zu werden.

## Claims

1. Wire guide block comprising a guide hole (2) for guiding a plurality n of metal wire elements k, each metal wire element k having a radius *r*_{1,k}, the guide hole (2) comprising:
- a plurality of *n* centring portions (4), each centring portion (4) being configured to centre a metal wire element k along a centring axis *A_{c}* orthogonal to a discharging plane *Pᵢ* of the metal wire element, each centring portion being inscribed, in the plane *Pᵢ*, in a circle *Cᵢ* centred on a point of the centring axis *A_{c}* and having a radius *r*_{2,k} that is greater than or equal to 1.03 *r*_{1,k} and is less than or equal to 1.20 *r*_{1,k}, each centring portion (4) being delimited by at least three centring surfaces that are tangential to the circle *Cᵢ*, the centring surfaces being separated from each other in pairs;
- at least one main discharging portion (8) configured to discharge a material resulting from the abrasion of the metal wire elements when they pass between the centring surfaces of the centring portions (4);
said main discharging portion (8) forming a passage connecting together at least two centring portions (4).

2. Wire guide block according to the preceding claim, wherein the surface ratio RS, which corresponds, in the plane *Pᵢ*, to the quotient of the sum of the surfaces of the circles inscribed in the centring portions (4) by the surface of the guide hole (2), is greater than or equal to 0.51, preferably greater than or equal to 0.53, more preferably greater than or equal to 0.57, and even more preferably greater than or equal to 0.60.

3. Wire guide block according to the preceding claim, wherein the surface ratio RS, which corresponds, in the plane *Pᵢ*, to the quotient of the sum of the surfaces of the circles inscribed in the centring portions (4) by the surface of the guide hole (2), is less than or equal to 0.90, preferably less than or equal to 0.80, more preferably less than or equal to 0.75, and even more preferably less than or equal to 0.70.

4. Wire guide block according to any one of the preceding claims, wherein:
- a first main discharging portion (8a) forms a passage connecting a first centring portion (4b) to a second centring portion (4a); and
- a second main discharging portion (8b) forms a passage connecting the first centring portion (4b) to a third centring portion (4c).

5. Wire guide block according to any one of the preceding claims, wherein each main discharging portion (8a) is delimited by an open guidance curve delimited by:
- a first pair of centring surfaces (9a, 9c) of a first centring portion (4a);
- a second pair of centring surfaces (6d, 6b) of a second centring portion (4b), the main discharging portion (8a) forming the passage connecting together the first and the second centring portion (4a, 4b);
the shortest distance between each centring surface of each first and second pair (6b, 6d, 9a, 9c) being less than each radius *r*_{1,k} of each metal wire element k intended to be respectively centred in each first and second centring portion (4a, 4b) so as to prevent the passage of the metal wire element from each centring portion (4a, 4b) in the main discharging portion (8a).

6. Wire guide block according to any one of the preceding claims, wherein the guide hole (2) comprises at least one additional discharging portion (10a1, 10b1, 10c1), each additional discharging portion (10a1, 10b1, 10c1) being delimited by a closed guidance curve connecting two centring surfaces (6a and 6b, 6a and 6c, 6c and 6d) of the same centring portion (4a) together and delimited by these two centring surfaces (6a and 6b, 6a and 6c, 6c and 6d) of this same centring portion (6a).

7. Wire guide block according to the preceding claim, wherein each centring surface (6a, 6b, 6c, 6d) of a centring portion (4a) is, in the plane *Pᵢ*, connected to another centring surface (6a, 6b, 6c, 6d, 9a, 9c):
- by a guidance curve of an additional discharging portion (10a1, 10b1, 10c1) in case the other centring surface (6a, 6b, 6c, 6d) delimits the same centring portion (4a); and
- by a guidance curve of a main discharging portion (8a) in case the other centring surface (9a, 9c) delimits another centring portion (4b).

8. Wire guide block according to the preceding claim, wherein the shortest distance between the two centring surfaces (6a and 6b, 6a and 6c, 6c and 6d) of the guidance curve delimiting the additional discharging portion (10a1, 10b1, 10c1) is less than *r*_{1,}*ₖ,* so as to prevent the passage of the metal wire element k from the centring portion (4a) intended to centre the metal wire element k in the additional discharging portion (10a1, 10b1, 10c1).

9. Sheathing device comprising a wire guide block according to any one of the preceding claims, comprising a feed channel configured to convey a polymeric sheathing composition to the outlet of each centring portion.

10. Method for centring a plurality of metal wire elements, comprising at least:
- a step of supplying a plurality of metal wire elements; and
- a step of centring each metal wire element through a respective centring portion (4) of a wire guide block according to any one of Claims 1 to 8.

11. Method for producing a strip comprising a plurality of metal wire elements collectively coated with a polymeric composition, the method comprising:
- a method for centring the plurality of metal wire elements according to the preceding claim; then
- a step of collectively coating the plurality of metal wire elements with the polymeric composition.

12. Method for producing a product reinforced by extrusion, comprising the steps of a method for producing a strip according to the preceding claim, and comprising, after the step of collectively coating the plurality of metal wire elements with the polymeric composition, a step of immersing the strip in an elastomer matrix.

13. Method for producing a tyre comprising the steps of at least one method according to any one of Claims 10 to 12.

14. Use of a wire guide block corresponding to one of Claims 1 to 8 for centring a plurality of metal wire elements.

15. Assembly comprising a wire guide block according to one of Claims 1 to 8 and a plurality of metal wire elements k with a radius r_{1,k}, each metal wire element k being intended to be respectively centred by a centring portion (4) of the wire guide block.
